# EUROPEAN PATENT APPLICATION

(11) **EP 3 285 160 A1**
(43) Date of publication of application: **21.02.2018**
(21) Application number: 17185325.2
(22) Date of filing: 08.08.2017
(51) Int. Cl.: G06F 3/16, G06K 9/00, B66B 1/46, G05B 15/02

(54) **INTENTION RECOGNITION FOR TRIGGERING VOICE RECOGNITION SYSTEM**

(30) Priority: 19.08.2016 US 201615241751
(71) Applicant: Otis Elevator Company, Farmington, Connecticut 06032 (US)
(72) Inventor: WANG, Hongcheng, East Hartford, CT 06108 (US); FINN, Alan Matthew, East Hartford, CT 06108 (US); HSU, Arthur, East Hartford, CT 06108 (US); XIONG, Ziyou, East Hartford, CT 06108 (US)
(74) Representative: Schmitt-Nilson Schraud Waibel Wohlfrom Patentanwälte Partnerschaft mbB

(57) **Abstract**

A method and intent recognition system that triggers voice recognition is provided. The intent recognition system includes an intent recognition device that detects a user location and/or behavior in a building and detects a triggering event based on the user location and/or behavior that suggests the user wants to input a service request, a prompt device that is triggered to provide a prompt based on the detecting by the intent recognition device and the detected triggering event, a listening device that receives an auditory input from the user, a signal processing device that processes the received auditory input and generates a control signal, and in-building equipment that receives the control signal from the signal processing device and controls the in-building equipment based on the control signal.

## Description

The subject matter disclosed herein generally relates to voice recognition and, more particularly, to intention recognition for triggering voice recognition.

Traditionally, a person's interaction with in-building equipment such as an elevator system, lighting, air conditioning, electronic equipment, doors, windows, window blinds, etc. depends on physical interaction such as pushing buttons or switches, entering a destination at a kiosk, etc. Further, a person's interaction with some in-building equipment is designed to facilitate business management applications, including maintenance scheduling, asset replacement, elevator dispatching, air conditioning, lighting control, etc. through the physical interaction with the in-building equipment. With advances in technology, systems requiring less physical interaction can be implemented such as voice controlled systems that include different activation types.

For example, existing systems mainly employ one of two modes to activate a voice recognition system. Typically, a first mode includes a user pushing a button to activate the voice recognition system, and a second mode includes the user speaking a specific set of words to the voice recognition system such as "OK, Google".

For example, using an elevator as an example of the in-building equipment, in the button activated mode, the system may require an extra voice recognition button in the elevator car or in the hall. If the button is installed in the hall, a user may push the up or down button to activate the voice recognition, or may push an additionally installed button to activate the voice recognition for floor destination. Requiring a button press defeats many of the advantages of a voice recognition system.

In the non-button mode, amongst other things, a user may not realize there is a voice recognition system in the car or hall. Further, even assuming the user recognizes that a voice activated system is present, there may be a number of false detections during normal conversations between potential passengers due to a constant need for the system to be listening to try and detect the triggering voice activation. Further, this constant listening and processing of all sound detected presents privacy concerns and a heavy signal processing load that may require substantial processing hardware and connectivity to be provided to support the constant signal load.

Accordingly, any improvements to a non-button mode are welcome in the current state of the art that could improve, for example, the building occupant's experience and/or the system.

According to one embodiment an intent recognition system that triggers voice recognition is provided. The intent recognition system includes an intent recognition device that detects at least one of a user location and a behavior in a building and detects a triggering event based on the at least one of the user location and the behavior that suggests the user wants to input a service request, a prompt device that is triggered to provide a prompt based on the detecting by the intent recognition device and the detected triggering event, a listening device that receives an auditory input from the user, a signal processing device that processes the received auditory input and generates a control signal, and in-building equipment that receives the control signal from the signal processing device and controls the in-building equipment based on the control signal.

In addition to one or more of the features described above, or as an alternative, further embodiments may include, wherein the intent recognition device is one or more selected from a group including a 3D sensor, a 2D sensor, a motion sensor, a microphone or an array of microphones, a button or set of buttons, a switch or set of switches, a keyboard, a touchscreen, an RFID reader, a capacitive sensor, a wireless beacon sensor, a pressure sensitive floor mat, radar system, sonar system, and a gravity gradiometer.

In addition to one or more of the features described above, or as an alternative, further embodiments may include, further including a mobile device of the user, wherein the mobile device is one selected from a group including a mobile phone, a beacon, an RFID tag, a tablet, and a wearable electronic, wherein the mobile device provides at least one of user information, presence, proximity, and tracking ability to the intent recognition system.

In addition to one or more of the features described above, or as an alternative, further embodiments may include, wherein the in-building equipment includes an elevator system that includes an elevator controller and one or more elevator cars, wherein the elevator controller received the control signal from the signal processing device and controls the one or more elevator cars based on the control signal.

In addition to one or more of the features described above, or as an alternative, further embodiments may include, wherein the triggering event is one or more selected from a group including a position of a user, a behavior of a user, a trajectory of a user, an identification of a user, a usage history for an identified user, a visual dimension of a user, an auditory command from a user, and a gesture from a user.

In addition to one or more of the features described above, or as an alternative, further embodiments may include, wherein the prompt device is one or more selected from a group including a speaker, light, and a display.

In addition to one or more of the features described above, or as an alternative, further embodiments may include, wherein the prompt is one or more selected from a group including a verbal request for an elevator call, a verbal request to confirm a received elevator call, a verbal request to provide a security passphrase, and a verbal request for a particular elevator car.

In addition to one or more of the features described above, or as an alternative, further embodiments may include, wherein the prompt is one or more selected from a group including a visual representation displayed on a display screen located within visual range of the user, and wherein the visual representation includes one or more of a written question, a symbol, a group of symbols, and an animation.

In addition to one or more of the features described above, or as an alternative, further embodiments may include, wherein the listening device is one or more selected from a group including a microphone and a microphone array.

In addition to one or more of the features described above, or as an alternative, further embodiments may include, wherein the auditory input is one or more selected from a group including a verbal command from the user that includes at least a direction of travel, a floor number, a verbal command requesting a particular elevator car, a verbal command requesting a particular elevator car arrival time, a verbal command requesting a particular elevator arrival time based on the detecting of another triggering event, wherein the another triggering event can include the arrival of a second user.

In addition to one or more of the features described above, or as an alternative, further embodiments may include, wherein the control signal includes an elevator call based on the auditory input.

According to another embodiment, a method with intent recognition for triggering voice recognition is provided. The method includes detecting, using an intent recognition device, at least one of a user location and a behavior in a building, detecting, using the intent recognition device, a triggering event based on the at least one of the user location and the behavior that suggests the user wants to input a service request, providing a prompt, using a prompt device, that is triggered based on the detecting by the intent recognition device and the detected triggering event, receiving, using a listening device, an auditory input from the user, processing, using a signal processing device, the received auditory input and generating a control signal, and controlling in-building equipment that receives the control signal from the signal processing device and controls the in-building equipment based on the control signal.

In addition to one or more of the features described above, or as an alternative, further embodiments may include, controlling an elevator system that includes an elevator controller and one or more elevator cars using the control signal from the signal processing device.

In addition to one or more of the features described above, or as an alternative, further embodiments may include, wherein the intent recognition device is one or more selected from a group including a 3D sensor, a 2D sensor, a motion sensor, a microphone or an array of microphones, a button or set of buttons, a switch or set of switches, a keyboard, a touchscreen, an RFID reader, a capacitive sensor, a wireless beacon sensor, a pressure sensitive floor mat, radar system, sonar system, and a gravity gradiometer.

In addition to one or more of the features described above, or as an alternative, further embodiments may include providing additional information and tracking ability using a mobile device of the user, wherein the mobile device is at least one from a group including a mobile phone, a beacon, an RFID tag, a tablet, and a wearable electronic.

In addition to one or more of the features described above, or as an alternative, further embodiments may include, wherein the triggering event is one or more selected from a group including a position of a user, a behavior of a user, a trajectory of a user, an identification of a user, a usage history for an identified user, a visual dimension of a user, an auditory command from a user, and a gesture from a user.

In addition to one or more of the features described above, or as an alternative, further embodiments may include, wherein the prompt device is one or more selected from a group including a speaker, a light, and a display, wherein the prompt is one or more selected from a group including a verbal request for an elevator call, a verbal request to confirm a received elevator call, a verbal request to provide a security passphrase, a verbal request for a particular elevator car, a visual representation displayed on a display screen located within visual range of the user, and wherein the visual representation includes one or more of a written question, a symbol, a group of symbols, and an animation.

In addition to one or more of the features described above, or as an alternative, further embodiments may include, wherein the listening device is one or more selected from a group including a microphone and a microphone array, and wherein the auditory input is one or more selected from a group including a verbal command from the user that include at least a direction of travel, a floor number, a verbal command requesting a particular elevator car, a verbal command requesting a particular elevator car arrival time, a verbal command requesting a particular elevator arrival time based on the detecting of another triggering event, wherein the another triggering even can include the arrival of a second user.

In addition to one or more of the features described above, or as an alternative, further embodiments may include, wherein the control signal includes an elevator call based on the auditory input.

In addition to one or more of the features described above, or as an alternative, further embodiments may include, wherein receiving the auditory input from the user includes listening for a limited length of time after the prompt is provided for the auditory input using the listening device.

In addition to one or more of the features described above, or as an alternative, further embodiments may include, wherein processing the received auditory input includes limiting a vocabulary that is searched for in the auditory input, recognizing one or more of the words from the vocabulary, and generating the control signal based on the recognized words, wherein the vocabulary includes one or more languages, one or more elevator specific phrases, and one or more elevator specific words.

According to another embodiment, a computer program product with intent recognition for triggering voice recognition is provided. The computer program product including a computer readable storage medium having program instructions embodied therewith, the program instructions executable by one or more processors to cause the processors to detect, using an intent recognition device, at least one of a user location and a behavior in a building, detect, using the intent recognition device, a triggering event based on the at least one of the user location and the behavior that suggests the user wants to input a service request, provide a prompt, using a prompt device, that is triggered based on the tracking by the intent recognition device and the detected triggering event, receive, using a listening device, an auditory input from the user, process, using a signal processing device, the received auditory input and generating a control signal, and control in-building equipment that receives the control signal from the signal processing device and controls the in-building equipment based on the control signal.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The foregoing and other features, and advantages of the present disclosure are apparent from the following detailed description taken in conjunction with the accompanying drawings in which:
FIG. 1A is a block diagram of an intent recognition system that triggers a voice recognition system in accordance with one or more embodiments;
FIG. 1B is a block diagram of a simplified intent recognition system that triggers a voice recognition system in accordance with one or more embodiments;
FIG. 2 is a diagram of an elevator lobby that includes an intent recognition system that triggers voice recognition for controlling an elevator system in accordance with one or more embodiments; and
FIG. 3 is a flowchart of a method that includes intention recognition of a user for triggering voice recognition for controlling an elevator system in accordance with one or more embodiments.

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

Embodiments described herein are directed to an enhanced voice-based interface for interacting with in-building equipment and service requests such as, for example, elevator control. One or more embodiments in accordance with the present disclosure include the use of intent or behavior recognition for activating a voice recognition system for in-building service requests. According to one or more embodiments, behavior recognition includes human activity recognition as is known in the art.

The interactions with in-building equipment are many and varied. A person might wish to control the local environment, such as lighting, heating, ventilation, and air conditioning (HVAC), open or close doors, and the like; control services, such as provision of supplies, removal of trash, and the like; control local equipment, such as locking or unlocking a computer, turning on or off a projector, and the like; interact with a security system, such as asking if anyone else is on the same floor, requesting assistance, and the like; or interact with in-building transportation, such as summoning an elevator, selecting a destination, and the like. This latter example of interacting with an elevator shall be used as exemplary, but not limiting, in the specification, unless specifically noted otherwise.

Particularly, in accordance with one or more embodiments, a behavior/intention recognition method and system for voice-based call registration is provided. The disclosed system may include an intent recognition device, a prompt device, a listening device, and an elevator system.

In accordance with one or more embodiments, the intent recognition device can also be called a localization, behavior recognition, and/or tracking module and can include one or more of a 3D sensor, such as a depth sensor; a 2D sensor, such as a video camera; a motion sensor, such as a PIR sensor; a microphone or an array of microphones; a button or set of buttons; a switch or set of switches; a keyboard; a touchscreen; an RFID reader; a capacitive sensor; a wireless beacon sensor; a pressure sensitive floor mat, radar system, sonar system, a gravity gradiometer, or any other known sensor or system designed for person detection, localization, behavior recognition, and/or intent recognition as described elsewhere herein.

In accordance with one or more embodiments, an intent recognition device may operate at any frequency in the electromagnetic spectrum, such as the infrared spectrum; at any frequency in the acoustic spectrum, such as the ultrasonic; or by direct presence or mass detection. Further, in accordance with one or more embodiments, various depth sensing sensor technologies and devices that can be used in the intent recognition device include, but are not limited to, a structured light measurement, phase shift measurement, time of flight measurement, stereo triangulation device, sheet of light triangulation device, light field cameras, coded aperture cameras, computational imaging techniques, simultaneous localization and mapping (SLAM), imaging radar, imaging sonar, echolocation, laser radar, scanning light detection and ranging (LIDAR), flash LIDAR, or a combination comprising at least one of the foregoing. Different technologies can include active (transmitting and receiving a signal) or passive (only receiving a signal) and may operate in a band of the electromagnetic or acoustic spectrum such as visual, infrared, ultrasonic, etc. In various embodiments, a depth sensor may be operable to produce depth from defocus, a focal stack of images, or structure from motion.

In accordance with one or more embodiments, the signals received by an intent recognition device can be processed by a signal processing device/module. For example a signal processing module for interpreting the input received by a listening device or other sensor as described above can be included. Such signal processing of the receiving signals from the sensors supporting the intent recognition module can be done in, for example, a digital signal processor that is located at a server, within the sensor device, or off-site. According to another embodiment, the signal processing module can be built into the intent recognition module.

The prompt device can also be referred to as a voice activation module and can include a speaker, light, and/or display that prompts a user for an auditory response. In accordance with one or more embodiments, the display can be static (e.g., a sign or placard) or programmable (e.g., a screen). The prompt device, or voice activation module, also triggers the system to activate for a set response time during which the system is configured to listen for a user's auditory response. The user may be provided the set response time during which the user can respond to the prompt that was provided. The system also includes a listening device that can include or be connected to a voice recognition module which can also be called a signal processing device. The signal processing device receives the auditory response from the user using the listening device and processes the auditory response to create an elevator control signal for controlling an elevator system.

According to one or more embodiments, the intent recognition device, which also called an intent recognition module, includes using sensors for intent recognition.

The intent recognition may require no presence or behavior other than would have normally been evident or evinced for an equivalent system without intent recognition (inherent activities/behaviors). That is, intent recognition may be inferred by detection and/or tracking a person or by service request detection (pushing a button) that the person would have otherwise done. For example, the intent recognition device may distinguish if a passenger is approaching an elevator, registering an elevator call, or leaving an elevator, or if a passenger is passing by the elevator, or if a passenger is talking and waiting for the elevator. According to an embodiment, if a person is approaching the elevator, the intent recognition device can recognize this behavior and further calculate the estimated time of arrival of the person to an elevator car. The intent recognition device can then send the behavior recognition results to at least the prompt device, which is also called the voice activation module, which uses the provided results to trigger an auditory and/or visual prompt to the user/person/passenger. According to one or more embodiments, the intent recognition device can recognize a person standing in front of an elevator door (implying intent to use the elevator) and can recognize a person passing by or leaving (implying no intent to use the elevator). The deduction of presence may be by a PIR sensor, which only produces an output when a sufficiently large warm object is present, by a 2D or 3D sensor utilizing background subtraction, and the like. Background subtraction may be achieved by a Gaussian Mixture Model, a Codebook Algorithm, Principal Component Analysis (PCA), and the like. The recognition of an activity/behavior may be by analysis of a trajectory or more sophisticated analysis of image/video features with or without context as explained elsewhere herein.

According to one or more embodiments, the intent recognition may also use specific behaviors designed to indicate intent. According to one or more other embodiments, the intent recognition can also be based on specific body movements, such as hand gestures or waving patterns; a user's verbal command, also known as a "wake-up phrase" such as "hello, elevator"; a user's trajectory over time, such as approaching an elevator; and the like. According to one or more embodiments, potential passengers are tracked individually by the intent recognition device, which allows the listening device to listen for a separate command from each passenger. The intent recognition may also beneficially use both inherent behaviors and specific behaviors in a joint estimation for improved accuracy. The joint estimation may be performed by Bayesian Estimation combining the probabilities if the inherent behaviors and specific behaviors.

According to one or more embodiments, the intent recognition device may additionally include sensors for detecting and/or communicating with a mobile device of the user. The mobile device can be a mobile phone, a beacon, an RFID tag, a tablet, a wearable electronic, and the like. These mobile devices may provide additional information as to the wearer's location and/or behavior, such as by WiFi tracking, Bluetooth localization, accelerometer readings, and the like; or intended destination, such as from an e-call app, e-mail calendar, and the like. The intent recognition may also beneficially use information from mobile devices, inherent behaviors, and specific behaviors in any combination in a joint estimation for improved accuracy. The joint estimation may be performed by Bayesian Estimation combining the probabilities if the mobile device information, inherent behaviors, and specific behaviors.

According to one or more embodiments, an example of the prompt device includes the prompt device receiving a signal indicating that a passenger has been detected and is approaching the elevator (a triggering event). Upon receiving this signal from the intent recognition device, the prompt device issues a welcome message, such as, "welcome, which floor would you like to visit?" This will, in turn, trigger the listening device to begin listening for an auditory response from the user for a set duration of time.

According to one or more embodiments, the signal processing device, which is also referred to as a voice recognition system, may be any of a variety of types, and may be run entirely locally, remotely, on a cloud server, over a network, run both locally and remotely, or any other combination thereof. When run both locally and remotely, loss of remote connection still allows the voice recognition system to recognize commands locally. Further, the voice recognition system may be trained for an elevator-specific vocabulary to allow higher recognition rate for commands and better rejection of words that might be misinterpreted. The voice recognition system communicates the passenger's desired destination to the elevator controller.

The elevator system includes an elevator control module, which is also called an elevator controller. The elevator controller may be any conventional elevator control module which accepts a call in the form of the desired direction of travel (up or down) or, in the case of a destination entry system, the desired destination floor. According to such an embodiment the controller may accept commands over an existing or add-on communication link, e.g., for retrofit applications. According to other embodiments, the elevator controller may include additional processing capabilities to function as both the elevator controller and the signal processing device (voice recognition system). In such an embodiment the elevator controller can receive the auditory response collected by the listening device directly for processing and control signal generation.

Further, according to one or more embodiments, the intent recognition system and voice recognition system can be used to acquire inputs from user for controlling and interacting with any in-building equipment and/or service requests. For example the intent recognition system could collect data indicating a user's intent to adjust light setting based on a gesture, location and/or behavior, or other intent recognition metric as discussed herein. This detection could then prompt the voice recognition system to being the voice capture portion from a user to get a specific control signal from the user to adjust the lights. This input could then be processed and converted into a control signal for an in-building lighting system. Similarly, the intent recognition and voice capture can be used to capture and generate other control signals from a user for using other in-building equipment or for controlling building service requests.

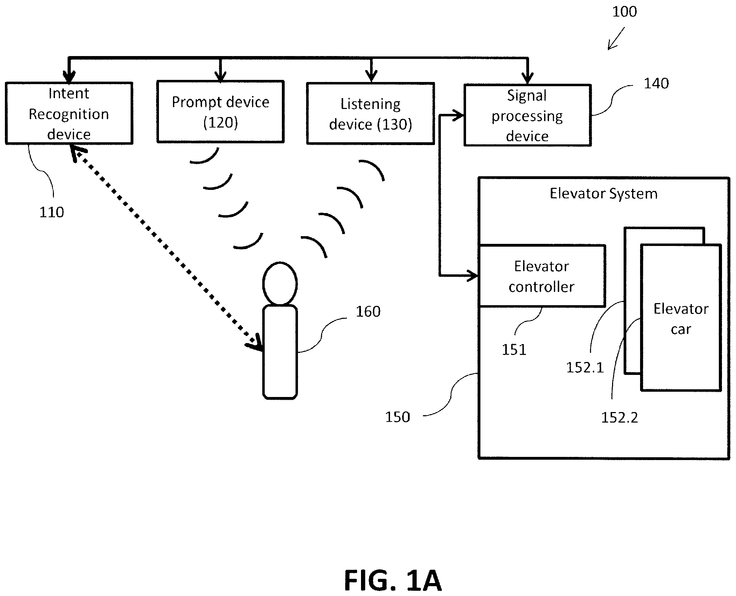

Turning now to FIG. 1A, a block diagram of an intent recognition system 100 that triggers a voice recognition system is shown in accordance with one or more embodiments. The system 100 includes an intent recognition device 110, a prompt device 120, a listening device 130, a signal processing device 140, and an elevator system 150. All these elements are configured to communicate with each other. Further, the prompt device 120 is configured to broadcast a prompt to the user 160 while the listening device 130 is configured to listen and receive a user's 160 auditory response to the prompt.

According to other embodiments, an intent recognition device 110, a prompt device 120, a listening device 130, a signal processing device 140, and an elevator system 150 are configured to communicate through a central server that directly handles communications. Further according to another embodiment, the intent recognition device 110 directly communicates with the prompt device 120 and other devices. According to another embodiment, the intent recognition device 110 communicates with a central controller which then communicates with to the prompt device 120 and other devices.

According to one or more embodiments, the intent recognition device 110 tracks a user's 160 location and/or behavior in a building and detects a triggering event based on tracking that suggests the user 160 wants to input an elevator call or some other elevator control input. According to one or more embodiments, the tracking may be by detection and tracking processes such as background subtraction, morphological filtering, and a Bayesian Filtering method such as a Kalman Filter or a Particle Filter. Background subtraction to produce foreground object(s) may be achieved by a Gaussian Mixture Model, a Codebook Algorithm, Principal Component Analysis (PCA), and the like. Morphological filtering may be a size filter to discard foreground object(s) that are not persons, e.g., are too small, have an inappropriate aspect ratio, and the like. A Bayesian Filter may be used to estimate the state of a filtered foreground object where the state may be position, velocity, acceleration, color vector, and the like. For example, the extrapolation of a position and velocity that intersects an elevator door may be a triggering event.

Other activity or behavior recognition techniques may be beneficially employed separately or in conjunction with tracking. Such techniques include Markov Logic Networks, Probabilistic Programming, Markov Random Fields, Convolutional Neural Networks, and the like.

The prompt device 120 is triggered to provide a prompt based on the tracking by the intent recognition device 110 and the detected triggering event. The listening device 130 receives an auditory input from the user 160 that is provided in response to the prompt from the prompt device 120. For example, the prompt device 120 may output an audio recording that asks, "What floor would you like?" to which the user 160 would reply with an auditory response that indicates the floor such as "floor forty four," that would be received by the listening device 130. The received signal at the listening device 130 is then provided to the signal processing device 140 that processes the received auditory input and generates a control signal.

Further, according to one or more embodiments, the system 100 also includes an elevator system 150. The elevator system 150 includes an elevator controller 151 and one or more elevator cars 152.1 and 152.2. The elevator controller 151 receives the control signal from the signal processing device 140 and controls the one or more elevator cars 152.1 and 152.2 based on the control signal. For example, the prompt device 120 may ask the user 160 what floor to which the user 160 responds verbally with 'twenty' which is received at the listening device 130. The signal processing device 140 takes the auditory response indicating floor twenty and processes the auditory response detecting the requested twentieth floor. Further the signal processing device 140 generates a control signal in the format required by the elevator controller 151 that contains the commands and instructions necessary to call an elevator car 152.1 and/or 152.2 and then dispatch it to the user 160 to take the user 160 to the twentieth floor.

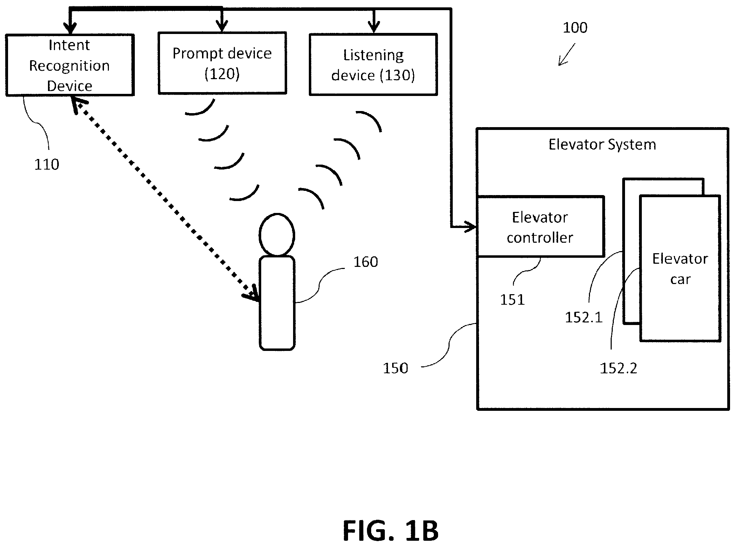

Turning now to FIG. 1B, a block diagram of a system 100 with intention recognition of a user 160 for triggering a voice recognition system is shown in accordance with one or more embodiments. This embodiment differs from that depicted in FIG. 1A in that this embodiment does not include a separate signal processing device 140. Instead this embodiment has the elevator controller provide the processing capability to process the auditory signal received from a user.

Specifically, the system 100 includes an intent recognition device 110, a prompt device 120, a listening device 130, and an elevator system 150 that incorporates a signal processing device within the elevator controller 151. All these elements are configured to communicatively communicate with each other. Further the prompt device 120 is configured to broadcast a prompt to the user 160 while the listening device 130 is configured to listen and receive a user's 160 auditory response to the prompt.

According to other embodiments, an intent recognition device 110, a prompt device 120, a listening device 130, a signal processing device 140, and an elevator system 150 that includes an elevator controller 151 are configured to communicate through a central server that directly handles communications. Further according to another embodiment, the intent recognition device 110 directly communicates with the prompt device 120 and other devices. According to another embodiment, the intent recognition device 110 communicates with the elevator controller 151 which then communicates with to the prompt device 120 and other devices.

According to one or more embodiments, the intent recognition device 110 tracks a user's 160 location and/or behavior in a building and detects a triggering event based on tracking that suggests the user 160 wants to input an elevator call or some other elevator control input. The prompt device 120 is triggered to provide a prompt based on the tracking by the intent recognition device 110 and the detected triggering event. The listening device 130 receives an auditory input from the user 160 that is provided in response to the prompt from the prompt device 120. For example, the prompt device 120 may output an audio recording that asks, "What floor would you like?" to which the user 160 would reply with an auditory response that indicates the floor such as "floor forty four," that would be received by the listening device 130. Further, the received signal at the listening device 130 is then provide to the signal processing device 140 that processes the received auditory input and generates a control signal.

According to one or more embodiments, the system 100 also includes an elevator system 150. The elevator system 150 includes an elevator controller 151 and one or more elevator cars 152.1 and 152.2. The elevator controller 151 receives the auditory input from the listening device 130 directly and controls the one or more elevator cars 152.1 and 152.2 based on a control signal generated from the auditory input. For example, the prompt device 120 may ask the user 160 what floor to which the user 160 responds verbally with 'twenty' which is received at the listening device 130. The elevator controller 151 takes the auditory response indicating floor twenty and processes the auditory response detecting the requested twentieth floor. Further the elevator controller 151 generates a control signal in the format required to call an elevator car 152.1 and/or 152.2 and then dispatch it to the user 160 to take the user to the twentieth floor.

According to one or more embodiments, the intent recognition device can be a one or more of a 3D sensor, a 2D sensor, a motion sensor, a microphone or an array of microphones; a button or set of buttons; a switch or set of switches; a keyboard; a touchscreen; an RFID reader; a capacitive sensor; a wireless beacon sensor; a pressure sensitive floor mat, radar system, sonar system, a gravity gradiometer or any combination thereof. According to one or more embodiments, the system can further include a mobile device of the user. The mobile device can be a mobile phone, a beacon, an RFID tag, a tablet, a wearable electronic, or any combination thereof. Further, the mobile device can provide information and tracking ability to the elevator system and/or localization device.

According to one or more embodiments, the triggering event can be a position and/or behavior of a user, a trajectory of a user, an identification of a user, a usage history for an identified user, a visual dimension of a user, an auditory command from a user, a gesture from a user, a press of a button, switch, keypad, or touchscreen, or any combination thereof.

According to one or more embodiments, the prompt device can be a speaker, light, display, and/or any other known notification device. The prompt may be a verbal annunciation to request user input, verbal annunciation to confirm a received elevator call, a verbal request to provide a security passphrase, a verbal request, or any combination thereof.

According to one or more embodiments, the prompt can be a visual representation displayed on a display screen located within visual range of the user. The visual representation can include one or more of a written question, a symbol, a group of symbols, an image, an animation, a video, or any combination thereof. Further, the prompt may include a verbal request corresponding to the display.

According to one or more embodiments, the listening device can be a microphone or a microphone array. According to one or more embodiments, the auditory input can be a verbal command from the user that include at least a floor number, a verbal command requesting a particular elevator car, a verbal command requesting a particular elevator car arrival time, a verbal command requesting a particular elevator arrival time based on the detecting of another triggering event, wherein the another triggering event can include the arrival of a second user. According to one or more embodiments, the control signal can include an elevator call based on the auditory input.

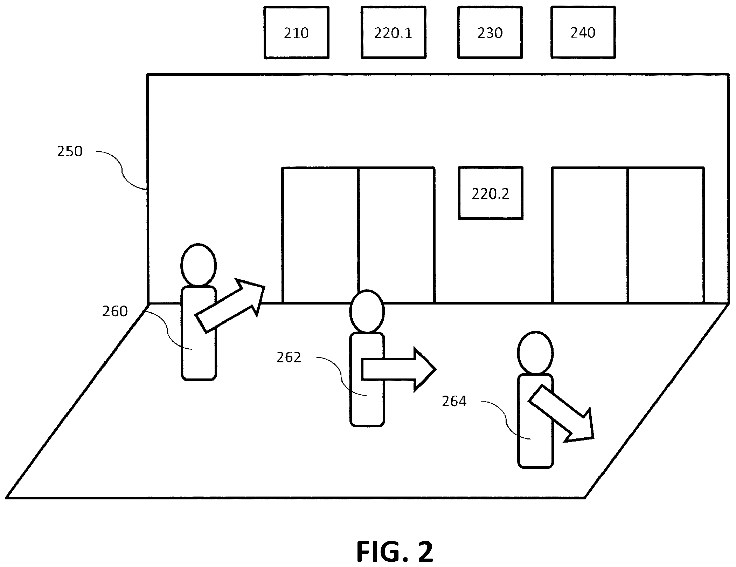

Turning now to FIG. 2, a diagram of an elevator lobby 250 that includes an intent recognition system that triggers voice recognition for controlling an elevator system is shown in accordance with one or more embodiments. A first user 260 is shown moving in a direct path toward an elevator car entrance. Accordingly, first user 260 has a trajectory and a position and/or behavior that, when tracked using an intent recognition device 210, would suggest this user 260 would like to use the elevator system. When this intention is detected, the intent recognition device 210 notifies the prompt device 220.1 and/or 220.2 which then provides either a verbal, prompt, a visual prompt, or other perceptible prompt including, for instance, an SMS message. For example, the prompt device 220.1 can include a speaker system that provides and audio output to the user 260 prompting the user 260 for their desired destination. Further, the visual display 220.2 can display the prompt request to the user 260 along with user identification and other relevant information. For example, the display 220.2 can display the prompt request "Floor 44 please" next to a user name of the person identified as making the request along with a visual representation of the status of the elevator car that has been assigned and is in transit towards the user. The listening device 230, which can include one microphone or an array of microphones, then begins listening for an auditory input from the user 260. If an auditory input is received, it is transmitted to the signal processing device 240 for processing into the generation of an elevator control signal. Alternatively, as discussed above, the auditory input may be transmitted directly to the elevator controller.

Alternatively, a second user 262 may be traveling along a trajectory detected by the intent recognition device 210 that would indicate that the second user 262 is merely passing by the elevators. The intent recognition device can also take into account the specific location and/or behavior along with the trajectory of the user 262 to make this intention determination. Further, other detectable factors such as velocity or acceleration can be taken into account as well in order to help better predict intent. For example, the intent recognition device 210 is constantly monitoring and updating the user 262 information in case the user 262 suddenly changes course and location and/or behavior in such a manner that would indicate that the user 262 now does want to use the elevator system. In the embodiment shown, the user 262 maintains their course parallel to the elevator doors, thereby indicating to the intent recognition device 210 that they are passing by the elevators. In this case the prompt devices 220.1 and 220.2 do not transmit a prompt to this user and the overall system remains dormant until a user is found that shows intention to use the elevator as indicated by their location/proximity and/or behavior to the elevators along with trajectory and other factors such as velocity, acceleration, and the like.

Further, according to another embodiment, a user 264 can be detected by the system and a triggering event avoided if the trajectory and position and/or behavior indicate that this user 264 is actively leaving the elevator area. For example, if a user is tracked over time such that the user's calculated travel trajectory has readjusted and now points in a direction moving away from the elevator, then a determination can be made that the user is actively leaving the elevator area.

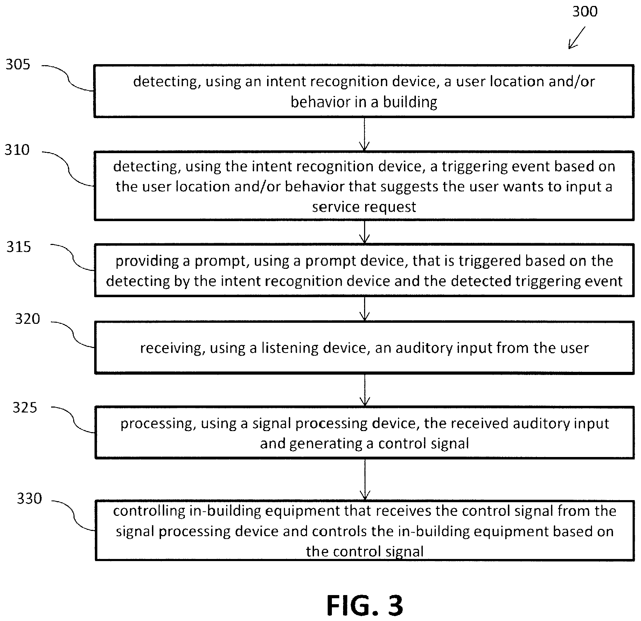

Turning now to FIG. 3, a flowchart of a method 300 that includes intention recognition of a user for triggering voice recognition for controlling an elevator system is shown in accordance with one or more embodiments. The method 300 includes detecting, using an intent recognition device, a user location and/or behavior in a building (operation 305). The method 300 also includes detecting; using the intent recognition device, a triggering event based on the user location and/or behavior that suggests the user wants to input a service request (operation 310). The method 300 includes providing a prompt based on the detecting by the intent recognition device and the detected triggering event (operation 315). The method 300 includes receiving, using a listening device, an auditory input from the user (operation 320). The method 300 includes processing, using a signal processing device, the received auditory input and generating a control signal (operation 325). The method 300 includes controlling in-building equipment that receives the control signal from the signal processing device and controls the in-building equipment based on the control signal (operation 330). For example, according to an embodiment, the method 300 can specifically control an elevator system that includes an elevator controller and one or more elevator cars using the control signal from the signal processing device.

According to one or more additional embodiments, the method 300 further includes providing additional information and tracking ability using a mobile device of the user, wherein the mobile device is at least one from a group consisting of a mobile phone, a beacon, an RFID tag, a tablet, and a wearable electronic.

According to one or more embodiments, the method 300 further includes listening for a limited length of time after the prompt is provided for the auditory input using the listening device. For example, the limited time can be a few seconds to a minute or more. Alternatively, according to other embodiments, the limited length of time can be defined by the user position and/or behavior and adjusted up or down based on the intent detected by the intent recognition system. For example if the user continues to move closer and edge near the elevator the time can continue to be augmented with a few second or minutes. Alternatively if originally 30 seconds was allocated but a user is suddenly detected as moving away rapidly from the elevator area then that time can be adjusted down.

According to one or more embodiments, the method 300 further includes limiting a vocabulary that is searched for in the auditory input and recognizing one or more of the words from the vocabulary. For example, the method can limit detection to listening for floor numbers present in the building only. The method 300 further includes generating the control signal based on the recognized words, wherein the vocabulary includes multiple languages and elevator specific phrases and words. The recognizing of a restricted set of words, possibly from multiple languages simultaneously may be achieved by training or retraining a deep neural network, convolutional neural network, recursive neural network, and the like.

According to one or more embodiments, a computer program product with user recognition for triggering voice recognition is provided. The computer program product includes a computer readable storage medium having program instructions embodied therewith, the program instructions executable by one or more processors to cause the processors to track, using an intent recognition device, a user location and/or behavior in a building. The program instructions also cause the processors to detect, using the intent recognition device, a triggering event based on the tracking that suggests the user wants to input an elevator call and provide a prompt, using a prompt device, that is triggered based on the tracking by the intent recognition device and the detected triggering event. Further, the computer program product is also configured to receive, using a listening device, an auditory input from the user, process, using a signal processing device, the received auditory input and generating a control signal, and control an elevator system that includes an elevator controller and one or more elevator cars using the control signal from the signal processing device.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description has been presented for purposes of illustration and description, but is not intended to be exhaustive or limited to the embodiments in the form disclosed. Many modifications and variations will be apparent to those of ordinary skill in the art without departing from the scope of the disclosure. The embodiments were chosen and described in order to best explain the principles of the disclosure and the practical application, and to enable others of ordinary skill in the art to understand various embodiments with various modifications as are suited to the particular use contemplated.

The present embodiments may be a system, a method, and/or a computer program product at any possible technical detail level of integration. The computer program product may include a computer readable storage medium (or media) having computer readable program instructions thereon for causing a processor to carry out aspects of the present disclosure.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Aspects of the present disclosure are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

Accordingly, the present disclosure is not to be seen as limited by the foregoing description, but is only limited by the scope of the appended claims.

## Claims

1. An intent recognition system that triggers voice recognition, the intent recognition system comprising:
an intent recognition device that detects at least one of a user location and a behavior in a building and detects a triggering event based on the at least one of the user location and the behavior that suggests the user wants to input a service request;
a prompt device that is triggered to provide a prompt based on the detecting by the intent recognition device and the detected triggering event;
a listening device that receives an auditory input from the user;
a signal processing device that processes the received auditory input and generates a control signal; and
in-building equipment that receives the control signal from the signal processing device and controls the in-building equipment based on the control signal.

2. The intent recognition system of claim 1, wherein the intent recognition device is one or more selected from a group comprising a 3D sensor, a 2D sensor, a motion sensor, a microphone or an array of microphones; a button or set of buttons; a switch or set of switches; a keyboard; a touchscreen; an RFID reader; a capacitive sensor; a wireless beacon sensor; a pressure sensitive floor mat, radar system, sonar system, and a gravity gradiometer.

3. The intent recognition system of claim 1 or 2, further comprising:
a mobile device of the user,
wherein the mobile device is one selected from a group comprising a mobile phone, a beacon, an RFID tag, a tablet, and a wearable electronic,
wherein the mobile device provides at least one of user information, presence, proximity, and tracking ability to the intent recognition system.

4. The intent recognition system of any of claims 1 to 3,
wherein the in-building equipment includes an elevator system that includes an elevator controller and one or more elevator cars, wherein the elevator controller received the control signal from the signal processing device and controls the one or more elevator cars based on the control signal.

5. The intent recognition system of any of claims 1 to 3,
wherein the triggering event is one or more selected from a group comprising a position of a user, a behavior of a user, a trajectory of a user, an identification of a user, a usage history for an identified user, a visual dimension of a user, an auditory command from a user, and a gesture from a user.

6. The intent recognition system of any of claims 1 to 5,
wherein the prompt device is one or more selected from a group comprising a speaker, light, and a display; and/or
wherein the prompt is one or more selected from a group comprising a verbal request for an elevator call, a verbal request to confirm a received elevator call, a verbal request to provide a security passphrase, and a verbal request for a particular elevator car; and/or
wherein the prompt is one or more selected from a group comprising a visual representation displayed on a display screen located within visual range of the user, and wherein the visual representation includes one or more of a written question, a symbol, a group of symbols, and an animation.

7. The intent recognition system of any of claims 1 to 6,
wherein the listening device is one or more selected from a group comprising a microphone and a microphone array.

8. The intent recognition system of any of claims 1 to 7,
wherein the auditory input is one or more selected from a group comprising a verbal command from the user that includes at least a direction of travel, a floor number, a verbal command requesting a particular elevator car, a verbal command requesting a particular elevator car arrival time, a verbal command requesting a particular elevator arrival time based on the detecting of another triggering event, wherein the another triggering event can include the arrival of a second user; and/or
wherein the control signal includes an elevator call based on the auditory input.

9. A method with intent recognition for triggering voice recognition, the method comprising:
detecting, using an intent recognition device, at least one of a user location and a behavior in a building;
detecting, using the intent recognition device, a triggering event based on the at least one of the user location and the behavior that suggests the user wants to input a service request;
providing a prompt, using a prompt device, that is triggered based on the detecting by the intent recognition device and the detected triggering event;
receiving, using a listening device, an auditory input from the user;
processing, using a signal processing device, the received auditory input and generating a control signal; and
controlling in-building equipment that receives the control signal from the signal processing device and controls the in-building equipment based on the control signal.

10. The method of claim 9, wherein controlling in-building equipment further comprises:
controlling an elevator system that includes an elevator controller and one or more elevator cars using the control signal from the signal processing device; and/or
wherein the intent recognition device is one or more selected from a group comprising a 3D sensor, a 2D sensor, a motion sensor, a microphone or an array of microphones; a button or set of buttons; a switch or set of switches; a keyboard; a touchscreen; an RFID reader; a capacitive sensor; a wireless beacon sensor; a pressure sensitive floor mat, radar system, sonar system, and a gravity gradiometer.

11. The method of claim 9 or 10, further comprising:
providing additional information and tracking ability using a mobile device of the user,
wherein the mobile device is at least one from a group comprising a mobile phone, a beacon, an RFID tag, a tablet, and a wearable electronic; and/or
wherein the triggering event is one or more selected from a group comprising a position of a user, a behavior of a user, a trajectory of a user, an identification of a user, a usage history for an identified user, a visual dimension of a user, an auditory command from a user, and a gesture from a user.

12. The method of any of claims 9 to 11,
wherein the prompt device is one or more selected from a group comprising a speaker, a light, and a display,
wherein the prompt is one or more selected from a group comprising a verbal request for an elevator call, a verbal request to confirm a received elevator call, a verbal request to provide a security passphrase, a verbal request for a particular elevator car, a visual representation displayed on a display screen located within visual range of the user, and
wherein the visual representation includes one or more of a written question, a symbol, a group of symbols, and an animation; and/or
wherein the listening device is one or more selected from a group comprising a microphone and a microphone array, and
wherein the auditory input is one or more selected from a group comprising a verbal command from the user that include at least a direction of travel, a floor number, a verbal command requesting a particular elevator car, a verbal command requesting a particular elevator car arrival time, a verbal command requesting a particular elevator arrival time based on the detecting of another triggering event, wherein the another triggering even can include the arrival of a second user; and/or
wherein the control signal includes an elevator call based on the auditory input.

13. The method of any of claims 9 to 12, wherein receiving the auditory input from the user comprises:
listening for a limited length of time after the prompt is provided for the auditory input using the listening device.

14. The method of any of claims 9 to 13, wherein processing the received auditory input comprises:
limiting a vocabulary that is searched for in the auditory input;
recognizing one or more of the words from the vocabulary; and
generating the control signal based on the recognized words,
wherein the vocabulary includes one or more languages, one or more elevator specific phrases, and elevator specific words.

15. A computer program product with intent recognition for triggering voice recognition, the computer program product comprising a computer readable storage medium having program instructions embodied therewith, the program instructions executable by one or more processors to cause the processors to:
detect, using an intent recognition device, at least one of a user location and a behavior in a building;
detect, using the intent recognition device, a triggering event based on the at least one of the user location and the behavior that suggests the user wants to input a service request;
provide a prompt, using a prompt device, that is triggered based on the tracking by the intent recognition device and the detected triggering event;
receive, using a listening device, an auditory input from the user;
process, using a signal processing device, the received auditory input and generating a control signal; and
control in-building equipment that receives the control signal from the signal processing device and controls the in-building equipment based on the control signal.
